# EUROPEAN PATENT APPLICATION

(11) **EP 1 754 785 A1**
(43) Date of publication of application: **21.02.2007**
(21) Application number: 05743503.4
(22) Date of filing: 26.05.2005
(51) Int. Cl.: C12N 15/00, C12M 1/00, G01N 21/03, G01N 21/07, G01N 21/27, G01N 21/64, G01N 21/77

(54) **REACTION VESSEL, REACTION MEASURING DEVICE, AND LIQUID ROTATING TREATMENT DEVICE**

(30) Priority: 27.05.2004 JP 2004158348
(71) Applicant: Universal Bio Research Co., Ltd., Matsudo-shi, Chiba 271-0064 (JP)
(72) Inventor: TAJIMA, Hideji, c/o UNIVERSAL BIO RESEARCH Co. Ltd, Matsudo-shi, Chiba 2710064 (JP)
(74) Representative: Bohnenberger, Johannes
(86) International application number: PCT/JP2005/009669
(87) International publication number: WO 2005/116202

(57) **Abstract**

An object is to provide a reaction vessel, a reaction measuring device, and a liquid rotating treatment device wherein temperature control of a liquid stored within the vessel can be performed with a high accuracy and faithful responsiveness. The construction is such that a vessel has: a storage chamber in which a liquid is storable, that has an opening part, and a reaction chamber that is communicated with the storage chamber and is formed thinner or narrower than the storage chamber, and the vessel is installable on a rotatable rotating body provided externally, and is formed such that when the vessel is installed on the rotating body, a rotation axis of the rotating body passes through the vessel, and the reaction chamber is positioned farther away from the rotation axis than the storage chamber.

## Description

### [Technical Field]

The present invention relates to a reaction vessel, a reaction measuring device, and a liquid rotating treatment device.

### [Background Art]

In recent years, the polymerase chain reaction (PCR) method is used in all biology related fields as a DNA amplification method that quickly and easily amplifies specific DNA fragments. The PCR method is a method that designs two primers that are complementary to the template DNA, and reproduces the area between the primers thereof within a test tube (in vitro). The method obtains the PCR products by exponentially amplifying the DNA by repeating temperature cycles wherein a reaction solution containing complementary DNA, primers, nucleotides, and thermostable DNA polymerase is incubated at various temperatures.

A single cycle comprises, with respect to a vessel charged with complementary DNA, the primer, DNA polymerase, nucleotides, and a reaction buffer solution; denaturation of the double stranded DNA into a single strand, annealing of the primer to the single stranded DNA, and incubation at the respective temperature conditions at which a DNA strand that is complementary to the single strand is synthesized, and a single molecule DNA fragment is made into two molecules. In the next cycle, since the DNA fragments synthesized in the previous cycle also become templates, the DNA fragments synthesized after n cycles becomes 2n molecules.

Conventionally, in regard to temperature control, the next heating or cooling of the temperature is performed by accommodating the vessel, which is formed by glass, or the like, charged with complementary DNA, the primer, DNA polymerase, nucleotides and the reaction buffer solution, within a block-shaped housing section of a constant temperature device formed by a material of aluminum, or the like, and heating or cooling the metallic block-shaped housing section and waiting until the liquid temperature becomes a uniform temperature distribution (Patent Document 1).

Consequently, until the reaction liquid within the vessel is heated or cooled, as well as a long time being taken to reach a uniform temperature distribution in the liquid temperature due to the large capacity of the vessel, complex temperature changes occur as a result of the differences in the heat capacity or the specific heat of the housing section and the vessel, and there is a problem in that complex temperature instructions need to be performed in order to perform DNA amplification at a high accuracy.

Incidentally, in the PCR method, temperature control is important, and by changing the temperature cycles, the quality and quantity of the finally obtained PCR products can be changed.

In particular, in real time PCR, a more accurate quantification is performed by detecting and analyzing the generation process of the amplification product of PCR in real time, and a more accurate and quick temperature control is necessary. Consequently, a variety of devices have been proposed (Patent Document 2, Patent Document 3, and Patent Document 4). However, these apparatuses are large-scale and complex devices in that they are provided with complex flow passages, or used large-scale centrifugal devices, and the like.

On the other hand, the present inventor has disclosed a reaction vessel having a reaction vessel body which is furnished with a reaction chamber that accommodates the reaction liquid, and a cap member that seals an opening part of the reaction chamber, and in addition a pressing section wherein the cap member presses the reaction liquid, and this has made it possible to perform quick temperature control on a simple device scale without the need for centrifugal force (Patent Document 5).

However, the present inventor, by combining the thinning or capillaration of a liquid of high thermal efficiency, and a reasonable centrifugal process based on the particular shape of the vessel thereof, has reached the idea of performing and obtaining a simultaneous shortening and automation of a consistent process in regard to PCR, and the like, without using a large-scale device.

[Patent Document 1] Publication of Japanese Patent No. 2622327
[Patent Document 2] Japanese Translation of PCT International Application, Publication No. 2000-511435
[Patent Document 3] Japanese Translation of PCT International Application, Publication No. 2003-500674
[Patent Document 4] Japanese Translation of PCT International Application, Publication No. 2003-502656
[Patent Document 5] Japanese Unexamined Patent Application, Publication No. 2002-10777

### [Disclosure of Invention]

### [Problems to be Solved by the Invention]

Accordingly, the present invention has been achieved in order to solve the problems mentioned above, and a first object thereof is in providing a reaction vessel, a reaction measuring device, and a liquid rotating treatment device wherein temperature control of a liquid stored within the vessel can be performed with a high accuracy and faithful responsiveness.

A second object is in providing a reaction vessel, a reaction measuring device, and a liquid rotating treatment device in which the process can be quickly performed by shortening the time from when a heating or cooling instruction is given until the liquid temperature is uniformly distributed.

A third object is in providing a reaction vessel, a reaction measuring device, and a liquid rotating treatment device in which a homogeneous reaction and highly accurate optical information is obtained as a result of thinning or capillaration of the liquid in a state where bubbles and gas regions have been removed from within the liquid.

A fourth object is in providing a reaction vessel, a reaction measuring device, and a liquid rotating treatment device in which consistent processing can be efficiently and automatically performed in regard to the liquid, which is the processing subject.

### [Means for Solving the Problem]

A first aspect of the invention is a reaction vessel being a vessel having: a storage chamber in which a liquid is storable, that has an opening part; and a reaction chamber that is communicated with the storage chamber and is formed thinner or narrower than the storage chamber, and the vessel is installable on a rotatable rotating body provided externally, and is formed such that when the vessel is installed on the rotating body, a rotation axis of the rotating body passes through the vessel, and the reaction chamber is positioned farther away from the rotation axis than the storage chamber.

Here, the "storage chamber" is a portion in which the liquid is storable, and is provided to simplify the introduction of the liquid into the reaction chamber. The introduction of the liquid into the storage chamber is performed from the opening part. The size or the thickness of the storage chamber is a size or a thickness at which the introduction of the liquid from the opening part to the storage chamber can basically be easily performed by gravity alone, or a size or a thickness in which it is possible to install a rotating body on the opening part.

The "reaction chamber" is a thinness (narrowness) level at which the introduction of the liquid is not easily performed by gravity alone in a state where the contamination of gas has been eliminated. The thickness or the width of the reaction chamber is, for example, 0.1 millimeters to 3 millimeters. The respectively manipulated liquid quantity corresponds to, for example, several µ liters to 300 µ liters. According to this quantity, the processing time of the PCR method corresponds to approximately several minutes to several tens of minutes.

The "communication" is, in the case of continuous communication, performed by providing one flow passage, or two flow passages comprising a flow passage for liquid introduction and a flow passage for discharging, or the like. In order to introduce the liquid into the reaction chamber in a state where the contamination of gas has been eliminated, a centrifugal force is utilized in the manner mentioned below.

The reason for providing the "reaction chamber" is for improving the efficiency of the heating process such that by introducing the liquid into the reaction chamber, at the very least, the heat transmission time in the thickness direction of the liquid is shortened, heat is transferred to the liquid over a short time, and a temperature distribution such that the liquid temperature promptly becomes uniform can be achieved. Accordingly, the heating or the cooling can be performed by bringing a solid or a liquid heating and cooling medium into contact with, or close to, the reaction chamber, or by blowing hot air or cold air by means of a dryer. Furthermore, it is performed such that the reaction chamber is sandwiched from both lamination directions thereof by the heating or cooling medium, that is to say, sandwiched in the thickness directions, or by blowing hot air or cold air from both sides of the reaction chamber.

The "vessel" has a portion (here, it is the storage chamber) in which the liquid is storable, and as long it has something of the manner thereof, it may be a dispensing tip form having, in addition to one opening part, a liquid suction and discharge part. Since the vessel has an opening part in the storage chamber, in order to achieve the function as a vessel, there is a need for it to be installed such that liquid does not come out from the opening part to the outside, even in a case where a rotating body is installed. That is to say, the opening part is not installed facing downwards or facing sideways without being blocked by a rotating body or another lid member thereof. Accordingly, in a case where the opening part is not blocked, there is a need for the opening part to be open facing upwards when it is used as a vessel or when it is installed on a rotating body such that the liquid is storable, and in regard to when it is installed on the rotating body of the vessel, the direction in which the opening part thereof is open and the rotation axis of the rotating body thereof become parallel in the vertical direction. A cap that blocks the opening part may be provided on the opening part. As the material of the vessel, for example, polyethylene, polypropylene, polystyrene, resins such as acrylics, glass, metal, metal compounds, and the like, are used.

Since "when the vessel is installed on the rotating body, the rotation axis of the rotating body passes through the vessel, and the reaction chamber is formed such that it is positioned farther away from the rotation axis than the storage chamber", the vessel is, as a result of the rotating body, rotatable about a rotation axis that passes through the vessel. That is to say, the vessel becomes rotatable.

Here, "the object rotates" refers to the rotation of the object about a rotation axis that passes through the object, and is a concept that contrasts revolution, in which the object thereof rotates about a rotation axis that only passes through the exterior of the object thereof. The liquid stored in the storage chamber is, as a result of the high-speed rotation of the rotating body, moved into the reaction chamber, which is installed in a position farther away with respect to the rotation axis than the storage chamber, as a result of a centrifugal force, and since gas has a smaller specific gravity than liquid, it moves in a direction closer to the axis than the liquid, and the liquid can be introduced into the reaction chamber in a state where it is not contaminated by gas. Furthermore, if the reaction chamber is placed on the underside of the storage chamber, gravity can also be used. Therefore, the introduction of the liquid into the reaction chamber can be made even easier. Here, "high-speed rotation" represents, for example, several hundred rpm to several thousand rpm. The "rotation axis" represents the straight line about which rotation is performed in the surroundings thereof, with it as the center.

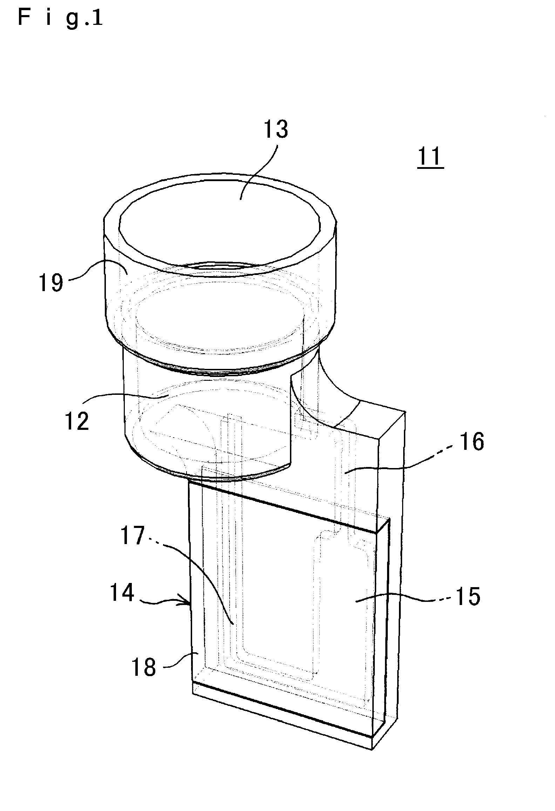

Furthermore, since "the reaction chamber is positioned farther away from the rotation axis than the storage chamber", for example, as shown in FIG. 1, there is a case in which it comprises a storage chamber having an opening part, and a reaction chamber that is communicated with the storage chamber and is formed in a layer form that is thinner than the storage chamber, or, there is a case in which it comprises a narrow tubular or thin layer form reaction chamber that extends diagonally downwards from the lower side of the fat tubular storage chamber, which has an opening part on the upper side. In regard to "positioned farther", for example, the one with the longer distance between the rotation axis and the center of gravity or the center of the portions that are the subject, is determined as the farther object.

Since the "vessel is installable on a rotatable body", the vessel has a portion that is installable on the rotating body, that is to say, an installation section. The installation section is, for example, the opening part, or another portion of the vessel, for example, a rotating body connecting axle mentioned below. Since such an installation section itself is a portion of the vessel, as a result, the rotation axis passes through the vessel. "Installation" includes engagement, threading, and other installation methods.

According to the reaction vessel of the first aspect of the invention, since the reaction vessel is rotatable about its own axis, the scale of the space necessary at the time when the reaction vessel rotates is suppressed, and the device scale can be reduced without the need to apply a centrifugal force by means of a large centrifugal device. Furthermore, by utilizing a rotatable nozzle mentioned below, processing using the vessel can be consistently automated.

Furthermore, according to the reaction vessel of the first aspect of the invention, the liquid is thinned or capillarated by introducing the liquid into the vessel, and temperature control of the liquid can be performed with a high precision and faithful responsiveness.

Furthermore, by thinning or capillarating the liquid, the time from giving the heating or cooling instruction until the liquid temperature becomes a uniform temperature distribution is shortened, and the process can be performed quickly and efficiently.

By utilizing centrifugal force, thinning or capillaration is performed in a state where contamination of bubbles and gas within the liquid has been removed, and when temperature control is performed, a uniform temperature distribution is obtained, and furthermore, optical information of a high precision can be measured.

Furthermore, since the reaction vessel is installably provided such that it is freely detachable on the rotating body provided on the exterior, then by installing the vessel on a rotating body and performing rotational driving, centrifugal force can be utilized to easily introduce the liquid, which has been temporarily stored in the storage chamber, into the reaction chamber. At that time, the liquid, or solid that is suspended in the liquid, can be introduced into the reaction chamber with certainty in a state where gas and bubbles have been removed as a result of centrifugal separation.

In this manner, in regard to the homogenized suspension, by introducing the liquid into the reaction chamber by utilizing centrifugal force or pressure, easy, certain, and uniform thinning or capillaration and sealing is achieved without contamination with bubbles or gas. As a result, the precision and responsiveness of the temperature control of the liquid is increased, and, for example, processes such as the measurement of quantities in real time PCR can be made quicker and more efficient.

A second aspect of the invention is a reaction vessel wherein the rotating body is a rotatable nozzle in which suction and discharging of gases is possible, and the nozzle has a rotation axis along an axial direction thereof.

It is preferable for the "nozzle" to be formed such that not only the vessel, but a dispensing tip and a rod form member are installable. Consequently, since dispensing and transportation of the liquid can be performed via the dispensing tip, and the homogenization process of the suspension can be performed via the rod form member, even more diversified processes can be performed.

According to the second aspect of the invention, a rotatable nozzle is used as the rotating body. Consequently, in addition to the thinning or the capillaration of the liquid resulting from the introduction of the liquid into the reaction chamber, it can be utilized for the dispensing of the liquid into the reaction vessel, and it can be applied to a variety of processes. Furthermore, since the rotation axis matches the axis of the nozzle, the rotation radius is small, and the device scale can be restricted.

A third aspect of the invention is a reaction vessel wherein the rotating body is installable on the opening part of the storage chamber, such that a rotation axis thereof passes through the opening part.

Here, in a case where the opening part and the rotating body are installed by engagement or threading, there is a need for the installation portion of the opening part and the rotating body thereof to match. For example, for a cylinder, there is a need to have a cylindrical inner surface. Furthermore, in a case where the opening part and the rotating body are installed by threading, the rotation direction resulting from the rotating body is the direction in which the rotating body moves forward with respect to the opening part as a result of threading. In this case, as a result, the axis of the opening part and the rotation axis coincide.

According to the third aspect of the invention, the rotating body is installable on the opening part of the storage chamber such that the rotation axis thereof passes through the opening part. Accordingly, since the opening part used originally for the introduction of liquid is also used for the installation of the rotating body, there is no need to provide a new rotating body installation section, and the structure is simplified.

Furthermore, it is possible to more certainly and easily install by threading or engagement of the rotating body and the reaction vessel, and particularly in a case where the rotating body is installed by threading, since the rotation of the rotating body can be utilized, it is efficient.

A fourth aspect of the invention is a reaction vessel wherein at least a portion of the reaction chamber is transparent or semi-transparent.

Here, the reason for making "a reaction chamber in which a portion is transparent or semi-transparent" is in order to obtain the optical information within the reaction chamber, and, for example, it is for measuring the quantity or concentration of genetic material, such as DNA, which has been labeled with fluorescence, and the like, by real time PCR.

Here, "real time PCR" refers to a method of performing PCR while measuring the amplification quantity of DNA in real time. In real time PCR, electrophoresis is unnecessary, and this has the advantages that the amplification is observable during the temperature cycles, and quantitative results are obtained. Methods that use normal fluorescent test reagents include the cycling probe method, the intercalator method, the Taqman probe method, and the Molecular Bacon method.

According to the fourth aspect of the invention, since at least a portion of the reaction chamber has translucence or semi-translucence, then in regard to real time PCR, and the like, the optical information within the reaction chamber can be easily obtained. In a case where the reaction chamber is not transparent or semi-transparent, the optical information can be obtained by providing an optical waveguide within the reaction chamber.

A fifth aspect of the invention is a reaction vessel, wherein a portion or the entire reaction chamber is formed by a soft material, and spaces within the reaction chamber are sealable by deforming the soft material.

Here, the "soft material", for example, deforms as a result of applying heat or a pressing force, or both thereof, and, for example, is a material that can seal by closing the narrow passage for communicating the reaction chamber with the storage chamber or the suction and discharge part. For example, it is polyethylene or silicone.

According to the fifth aspect of the invention, since a portion or the entire reaction chamber is formed by a soft material, by deforming a fixed portion of the soft material, a sealed thinned or capillarated liquid that is not contaminated with gas can be easily formed.

A sixth aspect of the invention is a reaction vessel wherein a cap, which is freely detachably installed on a lower end section of the rotating body, and that covers the lower end section, is freely detachably provided on the opening part in order to cover the opening part.

Here, between the cap and the lower end section of the rotating body, or between the cap and the opening part of the vessel, is installed by the various installation methods mentioned above.

According to the sixth aspect of the invention, since the cap that covers the lower end section of the rotating body is freely detachably provided, and the opening part of the vessel is installed via the cap, then in a case where high-speed rotation of the rotating body is performed, cross contamination resulting from the splashing of the liquid and the rotating body coming into direct contact with the liquid within the vessel is avoided with certainty. Furthermore, as a result of preventing the splashing of the liquid onto the upper side, the liquid is pushed back to the lower side, and a more efficient introduction of the liquid into the reaction chamber can be achieved.

A seventh aspect of the invention is a reaction vessel being a vessel having: a storage chamber in which a liquid is storable, that has an opening part; a reaction chamber that is communicated with the storage chamber and is formed thinner or narrower than the storage chamber; and a fluid suction and discharge part that is communicated with the reaction chamber, and is formed such that an opening part of the storage chamber is closable by means of a lower end section of a nozzle, which performs suction and discharging of fluid.

Here, the reaction chamber is, for example, communicated with the upper section of the storage chamber, and the suction and discharge part is, for example, provided on the lower end of a flow passage that communicates with the lower section of the reaction chamber. Here, by forming the flow passage with a small diameter, it is possible to handle various vessels provided on the exterior. "Closing" includes sealing, mounting, engaging insertion, engagement, fitting, installation, and the like. The size of the storage chamber is a size that can introduce the fluid into the reaction chamber by suction of the fluid, or a size that makes the suction and discharging by the nozzle possible. In this reaction vessel, the fluid is introduced into the reaction chamber from the suction and discharging part by suction of the fluid by the nozzle.

According to the seventh aspect of the invention, the liquid is introduced into the reaction chamber by utilizing the suction and discharge part and suction of the liquid through the reaction chamber to the storage chamber by means of the nozzle. Accordingly, the liquid can be introduced with certainty into the reaction chamber without the contamination of gas regions or bubbles. In this case, since there is no need to rotate the nozzle, the mechanism for introducing the liquid into the reaction chamber can be simplified.

An eighth aspect of the invention is a reaction vessel wherein at least a portion of the reaction chamber is transparent or semi-transparent.

According to the eighth aspect of the invention, since at least a portion of the reaction chamber possesses translucence or semi-translucence, then for real time PCR and the like, the optical information within the reaction chamber can be easily obtained. In a case where the reaction chamber is not transparent nor semi-transparent, the optical information can be obtained by providing an optical waveguide within the reaction chamber.

A ninth aspect of the invention is a reaction vessel, wherein a portion or the entire reaction chamber is formed by a soft material, and the reaction chamber is sealable by deforming the soft material.

According to the ninth aspect of the invention, since a portion or the entire reaction chamber is formed by a soft material, then by deforming a fixed portion of the soft material, a sealed thinned or capillarated liquid, that is not contaminated by gas can be easily formed.

A tenth aspect of the invention is a reaction measuring device comprising: one or two or more reaction vessels mentioned above; one or two or more heating and cooling sections that heat or cool the reaction chamber, which are provided making contact with, or close to, the reaction chamber; and one or two or more optical information measuring sections that obtain optical information within the reaction chamber.

Here, in regard to the direction in which heating or cooling is performed, and the direction in which light is received from the material suspended within the liquid, cases in which they are the same, and cases in which they are different, are possible.

According to the tenth aspect of the invention, heating and cooling is performed by the heating and cooling section provided making contact with, or close to, the reaction chamber of the reaction vessel. Accordingly, a metallic block or the like is not necessary, and in regard to the thinned or capillarated liquid in a state in which it is not contaminated by gas or bubbles, temperature control of the liquid stored within the vessel can be performed with high precision and faithful responsiveness. Furthermore, by heating or cooling the thinned or capillarated liquid in a state in which it is not contaminated by gas or bubbles, the process can be advanced quickly by shortening the time from giving the heating or cooling instruction until the liquid temperature is uniformly distributed.

Furthermore, since the optical information within the reaction chamber is measured in a state where it is not contaminated by gas or bubbles, optical information of a high precision can be obtained.

In particular, if it is made so that the liquid is heated or cooled such that the heating and cooling section is sandwiched from both sides along the lamination direction or the thickness direction, an even quicker and more efficient heating and cooling of the liquid can be performed.

An eleventh aspect of the invention is a reaction measuring device wherein the optical information measuring section comprises: two or more irradiation end sections provided at the two or more irradiation positions of the reaction chamber of the reaction vessel; a plurality of types of light sources which respectively generate light having a plurality of wavelength types; a light source selection section which temporally switches and selects one type of light within the light from the light sources and simultaneously transmits the light to the irradiation end sections; two or more light reception end sections provided at the two or more light reception positions of the reaction chamber of the reaction vessel; a light reception position selection section that temporally switches and selects the light from the light reception end sections; a filter selection section that temporally switches and selects among the plurality of types of filters which the light is to be passed through from the selected light reception position; and a photoelectric element that sequentially inputs the light that has passed through the selected filter, which is light from the selected light reception position.

Here, the plurality of types of filters have been provided because of a case such as where a labeling material that outputs a plurality of types of light wavelengths is used for labeling DNA fragments, and the like, for which the quantity or concentration is to be measured in real time PCR within the reaction chamber. As a result, by transmitting the light having all wavelengths through the filters, the presence of the corresponding labeling material, or the quantity thereof, can be measured.

The "photoelectric element" is an electron element utilizing the photoelectric effect, and includes photoelectric cells, photomultipliers, photoconductive cells, phototransistors, photodiodes, and the like.

According to the eleventh aspect of the invention, even in a case where two or more labeling materials are used with respect to two or more reaction vessels, the process can be performed using a small number of photoelectric elements by temporally switching the reaction chamber and the type of labeling material that becomes the subject of the labeling material. Therefore the device scale as a whole can be reduced or simplified.

A twelfth aspect of the invention is a reaction measuring device wherein the optical information measuring section comprises: two or more irradiation end sections provided at the two or more irradiation positions of the reaction chamber of the reaction vessel; a plurality of types of light sources which respectively generate light having a plurality of wavelength types; a light source irradiation position selection section that temporally switches and selects one type of light within the light from the light sources, and temporally switches the selected light and transmits the light to a light reception end section; two or more light reception end sections provided at the two or more light reception positions of the reaction chamber of the reaction vessel; a filter selection section that temporally switches and selects among the plurality of types of filters which the light is to be passed through from the selected light reception position; and a photoelectric element that sequentially inputs the light that has passed through the selected filter.

Here, the reason why the irradiation is necessary is that the excitation light is irradiated on the fluorescent material present within the reaction chamber to induce emission.

According to the twelfth aspect of the invention, even in a case where two or more labeling materials are used with respect to two or more reaction vessels, the process can be performed using a small number of photoelectric elements by temporally switching the reaction chamber and the type of labeling material that becomes the subject of the labeling material. Therefore the device scale as a whole can be reduced or simplified.

A thirteenth aspect of the invention is a liquid rotating treatment device having: one or two or more rotatable rotating bodies; one or two or more reaction vessels that are installably formed such that they are freely detachable on the rotating bodies; and a rotational drive section that rotationally drives the rotating bodies, and the reaction vessel has: a storage chamber, in which liquid is storable, that has an opening part; and a reaction chamber that is communicated with the storage chamber and is formed thinner or narrower than the storage chamber, and is formed such that a rotation axis of the rotating body passes through the vessel, and the reaction chamber is positioned farther away from the rotation axis than the storage chamber, and liquid stored in the storage chamber of the reaction vessel is introduced into the reaction chamber.

According to the present device, a centrifugal force is applied to the liquid within the storage chamber of the reaction vessel, and the liquid can be introduced into the reaction chamber, which is positioned farther away from the rotation axis than the storage chamber, in a state where it is not contaminated by gas. In regard to the reaction vessel, the reaction vessel according to the first aspect of the invention to the fifth aspect of the invention can be used.

By installing a rod form member mentioned below instead of the reaction vessel, it can be used as a device for homogenizing the suspension.

According to the thirteenth aspect of the invention, by rotating the reaction vessel about its axis by using the rotating body, the liquid stored in the storage chamber can be introduced into the reaction chamber by utilizing centrifugal force. Accordingly, the thinning or the capillaration of the liquid can be performed in a state without gas or bubbles.

Furthermore, since the liquid can be introduced into the reaction chamber by the rotation of the vessel, a large space in which the reaction vessel is revolved around a rotation axis that passes only through the exterior thereof, is unnecessary, and the introduction of the liquid can be achieved by utilizing a small-scale rotation device of basically the size of one vessel.

Since it has rotating bodies for rotating the vessel about its axis , by utilizing the rotating body, the rod form member is installed on the rotating body, and since the crushing of the solid material suspended within the suspension stored within the vessel, or fractionation can be performed, it has diversity.

In this manner, according to the thirteenth aspect of the invention, in regard to the homogenized suspension, by introducing the liquid into the reaction chamber by utilizing centrifugal force or pressure, easy, certain, and uniform thinning or capillaration and sealing is achieved without the contamination of bubbles or gas. As a result, the precision and responsiveness of the temperature control of the liquid is increased, and, for example, processes such as the measurement of quantities in real time PCR can be made quicker and more efficient.

A fourteenth aspect of the invention is a liquid rotating treatment device wherein the rotating body is a rotatable nozzle in which suction and discharging of a fluid is possible, and the nozzle has a rotation axis along an axial direction thereof.

According to the present aspect of the invention, it is possible to perform liquid suction and discharge by installing a dispensing tip, or to perform a homogenization process of the suspension by installing a rod form member. Furthermore, although it is necessary for the rotating body to have a moving section that is vertically movable, if it is also movable in the horizontal direction, it becomes possible to perform a further variety of processes by moving the rotating bodies to the vessels provided in a variety of positions.

According to the fourteenth aspect of the invention, by using the nozzle itself as a rotating body, the liquid rotating treatment device can be used as a dispensing device, and a variety of processes can be consistently automated by using a single liquid rotating treatment device.

A fifteenth aspect of the invention is a liquid rotating treatment device wherein the rotating body is installable on an opening part of the storage chamber, such that the rotation axis thereof passes through the opening part.

According to the fifteenth aspect of the invention, the rotating body is made to be installed on the opening part thereof. Accordingly, since the opening part used originally for the introduction of liquid is also used for the installation of the rotating body, there is no need to provide a new rotating body installation section, and the structure is simplified. Furthermore, it is possible to more certainly and easily install between the rotating body and the reaction vessel by threading or engagement. Particularly in a case where the rotating body is installed by threading, since the rotation of the rotating body can be utilized, it is efficient.

A sixteenth aspect of the invention is a liquid rotating treatment device having a cap which is freely detachably installed on a lower end section of the rotating body, and that covers the lower end section, and the cap is freely detachably installed on an opening part of the reaction vessel in order to cover the opening part.

According to the sixteenth aspect of the invention, since a cap that covers the lower end section of the rotating body is provided, and the opening part of the vessel is installed via the cap, then in a case where high-speed rotation of the rotating body is performed, cross contamination resulting from the splashing of the liquid and the rotating body coming into direct contact with the liquid within the vessel is avoided with certainty. Furthermore, as a result of preventing the splashing of the liquid onto the upper side, the liquid is pushed back to the lower side, and a the more efficient introduction of the liquid into the reaction chamber can be achieved.

A seventeenth aspect of the invention is a liquid rotating treatment device having:
one or two or more nozzles in which the suction and discharging of gas is possible; a rotating drive section that rotates the nozzle such that it has a rotation axis along an axial direction of the nozzle; a movement section that moves the nozzle; a rod form member that is freely detachably installed on a lower end section of the nozzle; and a vessel into which the rod form member is insertable, and inside which a suspension wherein a solid material is suspended that is to be crushed or homogenized by rotation of the rod form member, is storable.

Here, in a case where the solid material contained in the suspension is to be crushed or homogenized, the rod form member is installed and inserted into the vessel, and crushing or homogenizing is performed by applying a fluid force by rotating the rod form member within the vessel. In that case, the rod form member is, for example, in a state where it is inserted into the vessel, provided with a shape comprising, an outer surface that is close to the inner surface of the vessel, teeth-shaped protrusions, or concavities and convexities. Furthermore, it is acceptable for concavities and convexities to be formed on the inner surface of the vessel and the opposing outer surface of the rod form member. In regard to the liquid rotating treatment device, it is acceptable for a magnetic field to be applied within the tip, or for a removable magnetic device to be provided to the exterior of the dispensing tip installed on the nozzle.

Here, "having an outer surface that is close to the inner surface of the vessel" is in order to perform crushing or homogenization by rotating the rod form member in this state, to thereby generate a flow of the suspension based on the viscosity, in the narrow region between the outer surface of the rod form member and the inner wall surface of the vessel, and apply a fluid force to the solid material. Here, "solid material" refers to for example, biological tissue, and in that case, "crushing or homogenization" refers to the decomposition of the tissue to the cellular level.

Here, in regard to the outer surface of the rod form member, there is a case where it is the outer surface of the rod form member itself, and there is a case where it is the outer surface of a cover in cases where the outside of the rod form member has been covered by a removable cover. In the latter case, the rod form member itself does not come into contact with the liquid, and by exchanging the cover, it can be repeatedly used in processing without cleaning.

According to the seventeenth aspect of the invention, by using a rotatable nozzle, it can not only be used as a simple dispensing device by installing a dispensing tips on the nozzle, but by installing a rod form member on the nozzle, inserting the rod form member into the vessel which stores the suspension that becomes the subject of processing, and rotating the rod form member, the solid material contained within the suspension can be crushed or fractionated. Accordingly, as well as being able to be used in a variety of processes, the various processes can be consistently automatically performed.

Furthermore, according to the seventeenth aspect of the invention, by rotating the rod form members installed on the rotating body within the vessel, the suspension can be homogenized by crushing or fractionation of the solid materials within the suspension.

Furthermore, by forming the surface of the rod form member in a corrugated form, turbulent flow is generated by the corrugated faces, and it is even more effective in mixing, crushing, and fractionating the solid material.

An eighteenth aspect of the invention is a liquid rotating treatment device wherein the rod form member has a magnetic body bearing magnetism, and solid materials which are to be crushed or homogenized and magnetic particles are suspended in the suspension.

Here, if necessary the magnetic particles are coated with a binding material for capturing the target material. This is because, as a result, the homogenized or crushed solid material is bonded to the magnetic particles, a magnetic field is applied from the vessel or outside the dispensing tip installed on the nozzle, and it becomes possible to capture the material by attachment onto the inner wall surface of the vessel or the inner wall of the dispensing tip. In that case, by forming the rod form member by a magnetic body, such as a magnet, the magnetic particles are effectively mixed, and they can be separated and transported.

In regard to the magnetism exhibited by the rod form member, it is preferable for the lines of magnetic force to be oriented in a direction perpendicular to the axial direction of the rod form member. As a result, the direction of the lines of magnetic force, or the polarity, continuously changes as a result of the rotation of the rod form member, and the magnetic particles can be effectively moved and mixed by the rotation.

Furthermore, in regard to the vessel, by providing a magnetic body having a stronger magnetic force than the rod form member approaching the exterior thereof, the magnetic particles can be separated by attachment onto the inner wall surface of the vessel.

Here, the magnetic body may be detachably provided with respect to the vessel. By bringing the magnetic body close the vessel at the point of mixing, and by separating the magnetic body from the vessel at the time all of the magnetic particles are to be attached to the rod form magnetic body, a variety of processes can be performed.

According to the eighteenth aspect of the invention, the rod form member is rotated in a state where the magnetic particles are suspended within the suspension, the solid materials are crushed or fractionated, and as a result of the magnetic particles, a portion of the solid materials thereof can be attached and separated. Furthermore, by coating the magnetic particles with a material for bonding, it can also be used for the promotion of specific reactions. Furthermore, by using the device, it is possible to perform the transportation of the magnetic particles from vessel to vessel by attachment to the rod form member.

### [Brief Description of the Drawings]

FIG. 1 is a perspective view showing a reaction vessel according to an embodiment of the present invention (Embodiment 1).
FIG. 2 is a drawing showing the reaction vessel according to the embodiment of the present invention in a state where it is installed on a nozzle.
FIG. 3 is a drawing showing a reaction vessel according to an embodiment of the present invention in a state where it is installed on a nozzle (Embodiments 2 and 3).
FIG. 4 is a drawing showing a reaction vessel according to an embodiment of the present invention in a state where it is installed on a nozzle (Embodiments 4 and 5).
FIG. 5 is a drawing showing a reaction vessel according to an embodiment of the present invention in a state where it is installed on a nozzle (Embodiments 6, 7, and 8).
FIG. 6 is an overall view showing a reaction measurement processing system according to an embodiment of the present invention.
FIG. 7 is a side view showing a liquid rotating treatment device according to an embodiment of the present invention.
FIG. 8 is a concept diagram showing an example of vessels and rod form members used in a homogenization process according to an embodiment of the present invention.
FIG. 9 is usage state explanation diagram of a filter built-in tip according to an embodiment of the present invention.
FIG. 10 is a side view of a reaction measuring device according to an embodiment of the present invention.
FIG. 11 is a perspective view showing an example of a trigger light source and a light receiving section according to an embodiment of the present invention.
FIG. 12 is a perspective view showing an other example of a trigger light source and a light receiving section according to an embodiment of the present invention.
FIG. 13 is a process flow diagram according to an embodiment of the present invention.

### [Best Mode for Carrying Out the Invention]

Next, embodiments of the present invention are explained based on the drawings. Unless particularly specified, these embodiments should not be interpreted as limiting the present invention. Furthermore, the same parts in the embodiments are denoted by the same reference symbols, and the explanations have been omitted.

FIG. 1 is a perspective view showing a reaction vessel 11 according to a first embodiment of the present invention.
The reaction vessel 11 has a cylindrical storage chamber 12 which has an opening part 13, and a reaction section 14 which is formed in a layer form sandwiching a thinned reaction chamber 15 which is communicated with the storage chamber 12 and is thinner than the storage chamber 12 and of which the eternity is transparent. The opening part 13 is installable on a nozzle 22, which is a rotating body, via a cap 20 mentioned below. The reaction chamber 15 is on the underside of the storage chamber 12, and with respect to the axis of the opening part 13 or the storage chamber 12, it is provided in a position farther away than the storage chamber 12 in terms of the position coordinate. When the reaction vessel 11 is installed on the nozzle 22 mentioned below, which is a rotating body, the axis of the opening part 13 or the storage chamber 12 matches the rotation axis of the rotating body.

Accordingly, in a case where the rotating body is rotated, a centrifugal force is applied to the liquid within the storage chamber 12, and the liquid is introduced into the reaction chamber 15 of the reaction section 14, which is in a position farther away than the rotation axis. The reaction chamber 15 is communicated with the storage chamber 12 through a narrow liquid introduction flow passage 16 which has an entrance on the inner wall surface of the storage chamber 12 and an exit on the upper section of the reaction chamber 15, and a narrow discharging flow passage 17 which has an entrance on the lower section of the reaction chamber 15 and an exit on the bottom face of the storage chamber 12.

The discharging flow passage 17 is provided along the axis. As a result, in a case where the reaction vessel 11 is rotated about the axis, the flow of liquid is not impeded by the centrifugal force. The reaction section 14 is formed such that it sandwiches the reaction chamber 15 from both sides in planar fashion, and a plate 18 of one surface thereof is formed by a soft material that is easily deformed by a pressing force, such as a polyethylene or silicone, and is installed with a high water-tightness by means of an adhesive or the like, to the body of the reaction section 14 which is formed with the reaction chamber 15, the liquid introduction flow passage 16, and the discharging flow passage 17. An inner surface 19 of the opening part 13 is threaded, and it is threadable with an outer surface of a vessel-shaped cap 20 mentioned below.

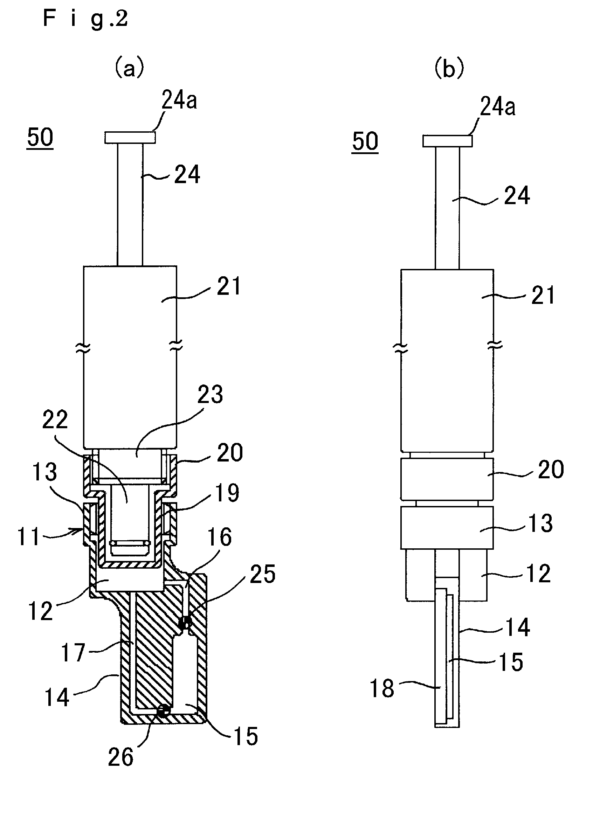

FIG. 2 (a) shows a side view of a partial cross-section in a case where the reaction vessel 11 according to the first embodiment is installed on the lower end section of the rotating body having the liquid rotating treatment device 50 according to an embodiment of the present invention, and FIG. 2 (b) shows a front view thereof.

As the rotating body of the liquid rotating treatment device 50 according to the present embodiment, a nozzle 22 in which suction and discharge of the fluid is possible, and which is rotatable about the axis thereof, is provided. The inner surface of the upper side of the cap 20 is threaded with the outer surface of the threaded section 23 of the nozzle 22 such that it covers the lower end section of the nozzle 22. As a result, contact between the nozzle 22 and the reaction vessel 11 that is to be installed, or with the stored liquid thereof, can be prevented. The outer surface of the cap 20 is threaded, and by threading with the inner surface of the opening part 13 of the reaction vessel 11, the reaction vessel 11 is installed on the nozzle 22. A cylinder (not shown in the drawing) which is communicated with the nozzle 22 and is rotatably provided together with the nozzle 22, is provided on the inner section of the cylindrical element 21, and is rotatably supported on the cylindrical element 21 via a bearing (not shown in the drawing). In order to perform the suction and discharging of the fluid of the nozzle 22, a rod 24 which vertically moves a plunger (not shown in the drawing) that adjusts the pressure within the nozzle 22, is provided within the cylinder. In regard to the upper end of the rod 24, an end section 24a which has a larger diameter than the diameter of the rod 24, is provided. The rod 24 which is inserted into the rotatable cylinder, is non-rotatably provided in the nozzle 22 or the cylinder.

In this manner, in the present embodiment, the interval between the threaded section 23 and the cap 20, and the interval between the cap 20 and the opening part 13 of the reaction vessel 11 is connected as a result of threading. Accordingly, it is necessary to thread the threaded portion in the tightening direction by rotation of the nozzle 22, which is the rotating body.

In FIG. 2 (a), reference symbols 25 and 26 denote closing positions for closing the flow passages 16 and 17 and sealing the liquid introduced into the reaction chamber 15. The closing of the flow passages 16 and 17 is performed by the heating and deformation of the plate 18 at the closing positions 25 and 26, by the heating and cooling section mentioned below.

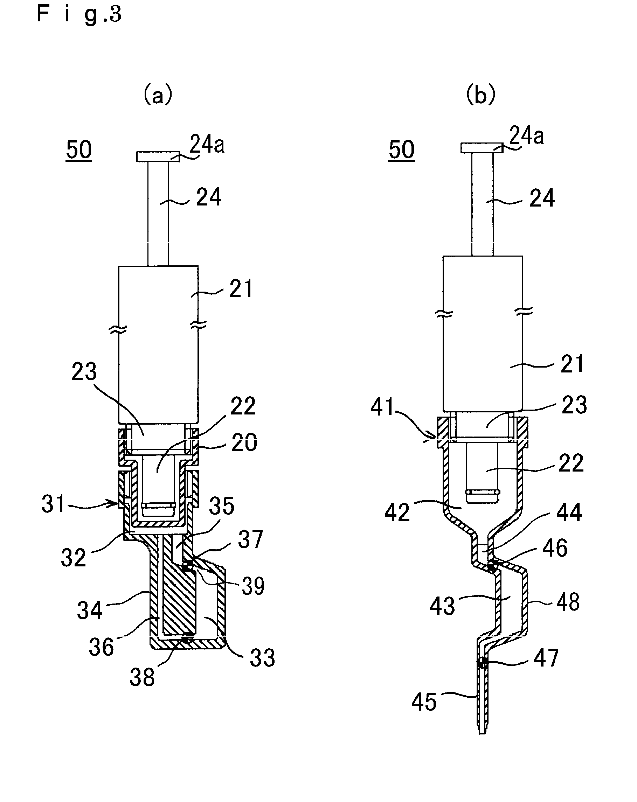

FIG. 3 (a) shows the lower end section of the rotating body of the liquid rotating treatment device 50 on which a reaction vessel 31 according to a second embodiment of the present invention has been installed.

The reaction vessel 31 is, in the same manner as the reaction vessel 11, installed on the nozzle 22 which is the rotating body, via the cap 20 by threading. However, the reaction vessel 31 is different to the reaction vessel 11 in that in regard to the storage chamber 32, a cavity 35 is provided in the bottom surface thereof, and a liquid introduction flow passage 36 and a discharging flow passage 39, which communicate between a thinned reaction chamber 33 and a cylindrical storage chamber 32, are communicated such that they have the entrances and exits thereof on the bottom surface of the storage chamber 32 or the cavity 35. In the present embodiment, since the liquid stored in the storage chamber 32 is made to be introduced into the reaction chamber 33 by centrifugal force following a temporary lowering into the cavity 35 as a result of gravity, it is particularly suited to cases where a small quantity of liquid is introduced. Here, reference symbols 37 and 38 denote closing positions of the flow passages 39 and 36 for sealing the liquid introduced into the reaction section 34.

FIG. 3 (b) shows the lower end section of the rotating body of the liquid rotating treatment device 50 on which a reaction vessel 41 according to a third embodiment of the present invention has been installed.

The reaction vessel 41 differs from the reaction vessels 11 and 31 of the first and the second embodiments in that it has a dispensing tip shape, and the liquid is not made a thin layer (thinned) by rotating the nozzle 22 which is the rotating body, and applying a centrifugal force, but instead the liquid is thinned by suction of the liquid as a result of moving the rod 24 of the nozzle 22, and making the inside of the reaction vessel 41 a negative pressure.

The reaction vessel 41 comprises a cylindrical storage chamber 42 having; an opening part that is blocked as a result of threading with the threaded section 23 of the nozzle 22 which is the rotating body, a reaction chamber 43 of the thinned reaction section 48, of which the entirety is transparent, which is on the underside of the storage chamber, communicated via the storage chamber 42 and the flow passage 44, and is formed thinner than the storage chamber 42, and a small diameter section 45 that is provided on the underside of the reaction chamber 43 and is communicated with the reaction chamber 43, and has a suction and discharge part. Furthermore, one surface of the reaction chamber 43 is, in the same manner as the embodiments mentioned above, formed by a plate of a soft material.

According to the reaction vessel 41 of the present embodiment, the small diameter section 45 is inserted into a vessel (not shown in the drawing) in which a liquid is stored, and as a result of the suction of the liquid to a position that slightly clears the suction and discharge part and the reaction chamber 43, by the nozzle 22, thinning is performed by introducing the liquid into the reaction chamber 43. Here, reference symbols 46 and 47 denote closing positions for sealing the reaction chamber 43, which is performed by deforming the plate by heating.

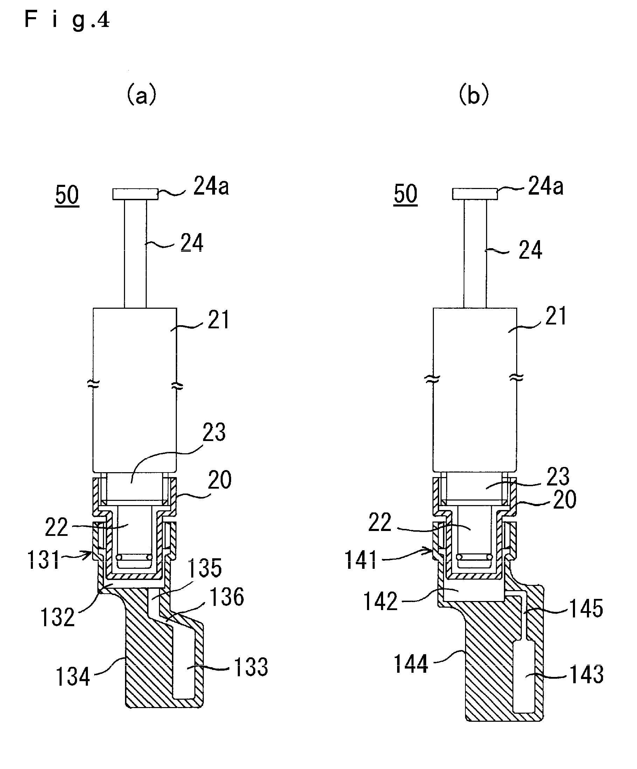

FIG. 4 (a) shows the lower end section of the rotating body of the liquid rotating treatment device 50 on which a reaction vessel 131 according to a fourth embodiment of the present invention has been installed.

The reaction vessel 131 is, in the same manner as the reaction vessels 11, 31 and 41, installed on the nozzle 22 which is the rotating body, via the cap 20 by threading. Furthermore, a reaction chamber 133 is in a position farther away than a storage chamber 132 with respect to the axis of the storage chamber 132, that is to say, the rotation axis. However, in regard to the reaction vessel 131, the reaction chamber 133 of a thinned reaction section 134, and the cylindrical storage chamber 132 are only communicated by a single flow passage 136. In the present embodiment, the liquid stored in the storage chamber 132 is introduced into the reaction chamber 133 by centrifugal force following a temporary lowering into a cavity 135 as a result of gravity, through the flow passage 136, which has an entrance at the cavity 135. In this case, it is acceptable for one surface of the reaction section 134 to be formed by a plate of a soft material, and for sealing to be performed by pressing the flow passage 136. However, since the reaction chamber 133 is communicated with the storage chamber 132 by only the single flow passage 136, the quantity of liquid leaked from the reaction chamber 133 is small even if it is not sealed. In the reaction vessel 131 according to the present embodiment, the structure of the reaction section 134 is simple, and the closing of the flow passage can be made at a single position, or is not necessary at all. Hence it is easily handled.

FIG. 4 (b) shows the lower end section of the rotating body of the liquid rotating treatment device 50 on which a reaction vessel 141 according to a fifth embodiment of the present invention has been installed.

In regard to the reaction vessel 141, in the same manner as the reaction vessel 131, a thinned reaction chamber 143 is in a position farther away than the axis of a cylindrical storage chamber 142, that is to say, the rotation axis, and the interval between the reaction chamber 143 of a reaction section 144 and the storage chamber 142 is only communicated by a single flow passage 145. However, it differs from the reaction vessel 131 in that a cavity is not provided in the storage chamber 142. It is acceptable for one surface of the reaction section 144 to be formed by a plate of a soft material, and for sealing to be performed by pressing the flow passage 145. However, since the reaction chamber 143 and the storage chamber 142 are communicated by only the single flow passage 145, the quantity of liquid leaked from the reaction chamber 143 is small even if it is not sealed. In the reaction vessel 141 according to the present embodiment, the structure of the reaction section 144 is simple, and the closing of the flow passage can be made at a single position, or is not necessary at all. Hence it is easily handled.

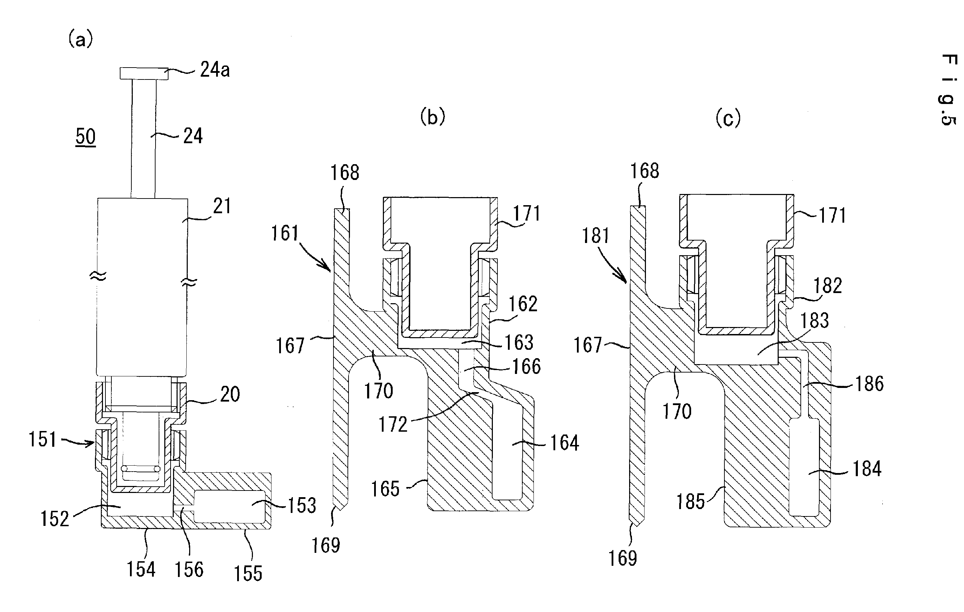

FIG. 5 (a) shows the lower end section of the rotating body of the liquid rotating treatment device 50 on which a reaction vessel 151 according to a sixth embodiment of the present invention has been installed.

The reaction vessel 151 differs from the reaction vessels 11, 31, 41, 131 and 141 in that a reaction chamber 153 of a reaction section 155 is positioned to the side of a storage chamber 152 via a flow passage 156. The reaction chamber 153 is clearly in a position farther away from the storage chamber 152 with respect to the axis of the storage chamber 152, that is to say, the rotation axis. In the reaction vessel 151 according to the present embodiment, since the reaction chamber 153 is provided to the side of the storage chamber 152, and the reaction chamber 153 is provided farther away than the storage chamber 152 as a whole, a strong centrifugal force can be applied, and the introduction of the liquid into the reaction chamber 153 is easy.

FIG. 5 (b) shows a cross-sectional view wherein a cap 171 has been installed in an opening part of a reaction vessel 161 according to a seventh embodiment of the present invention.

The reaction vessel 161 comprises a reaction vessel body 162 and a single rotating body connecting axle 167 that is connected to the reaction vessel body 162 by a connecting section 170. The reaction vessel body 162 has a cylindrical storage chamber 163 that is provided with an opening part in which a cap 171 is installable, and a reaction chamber 164 of a thinly formed reaction section 165, that is communicated with the storage chamber 163. Furthermore, a cavity 166 is provided in the bottom surface of the storage chamber 163. The interval from the cavity 166 to the reaction chamber 164 is communicated by a single flow passage 172. Furthermore, an upper end of the rotating body connecting axle 167 is connected to a rotating body (not shown in the drawing) by engagement, threading, or the like, and in synchronization with the rotation of the rotating body, the rotating body connecting axle 167, and accordingly the reaction vessel body 162, are rotatable.

Furthermore, the lower end 169 of the rotating body connecting axle 167 is able to engage or come into contact with a bearing section (not shown in the drawing) so that the rotating body connecting axle 167 is rotatably retained at the lower end. The reaction chamber 164 is in a position farther away than the storage chamber 163 with respect to the rotation axis, that is to say, a straight line along which the rotating body connecting axle 167 passes through the axial direction thereof. Also in regard to the reaction vessel 161 according to the present embodiment, the rotation axis in a case where it is installed on the rotating body, passes through the rotating body connecting axle 167, that is to say, a portion of the reaction vessel 161. In the reaction vessel 161 according to the present embodiment, with respect to the reaction chamber 164, since it is possible for the rotation axis to pass through the rotating body connecting axle 167, which is farther away than the storage chamber 163, it has a generality in that it can also be applied to a rotating body that cannot connect between the opening part.

FIG. 5 (c) shows the lower end section of the rotating body of the liquid rotating treatment device 50 on which a reaction vessel 161 according to an eighth embodiment of the present invention has been installed.

The reaction vessel 181 comprises, in the same manner as the reaction vessel 161, a reaction vessel body 182, and a single rotating body connecting axle 167 that is connected to the reaction vessel body 182 by a connecting section 170. The reaction vessel body 182 has a cylindrical storage chamber 183 that is provided with an opening part into which the cap 171 is installable, and a reaction chamber 184 of a thinly formed reaction section 185, that is communicated with the storage chamber 183 by a flow passage 186. However, it differs to the reaction vessel 161 in that a cavity is not provided.

In regard to the reaction vessel 181 according to the present embodiment, the rotation axis in a case where the rotating body is installed, passes through the rotating body connecting axle 167, that is to say, the reaction vessel 181. In the reaction vessel 181 according to the present embodiment, since it is possible for the rotation axis to pass through the rotating body connecting axle 167, which is farther away than the storage chamber 183 with respect to the reaction chamber 184, it has a generality in that it can also be applied to a rotating body that cannot connect between the opening part.

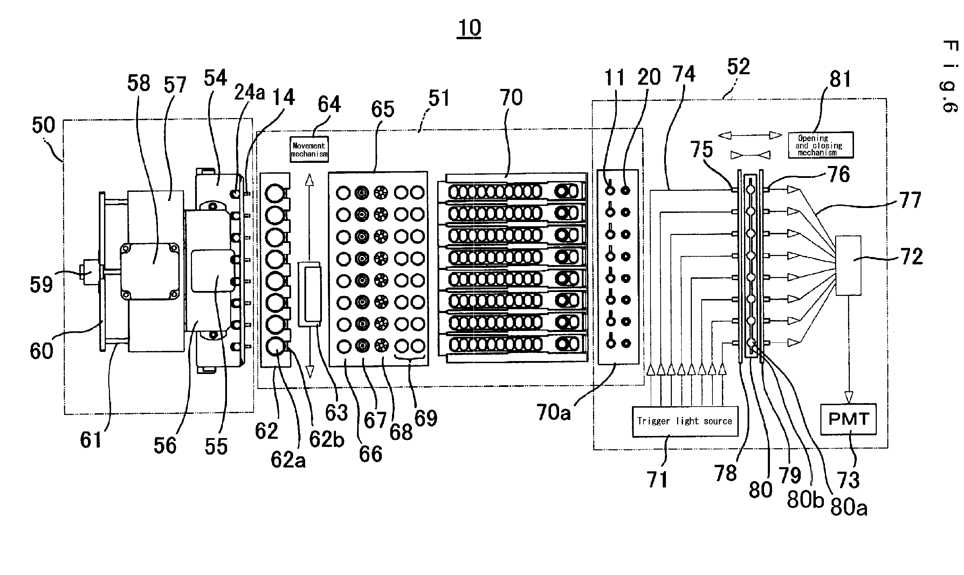

FIG. 6 is a concept diagram showing an entire reaction measurement processing system 10 according to an embodiment of the present invention.

The reaction measurement processing system 10 comprises; the liquid rotating treatment device 50, a liquid treatment area 51 in which measurement preparations such as homogenization, extraction, reaction, transportation, and thinning of suspension liquids containing specimens based on various specimens, test reagents, and the like, are performed, and a reaction measuring device 52 that obtains optical signals for executing real time PCR with respect to a solution that is sealed in the reaction chamber of the reaction vessel.

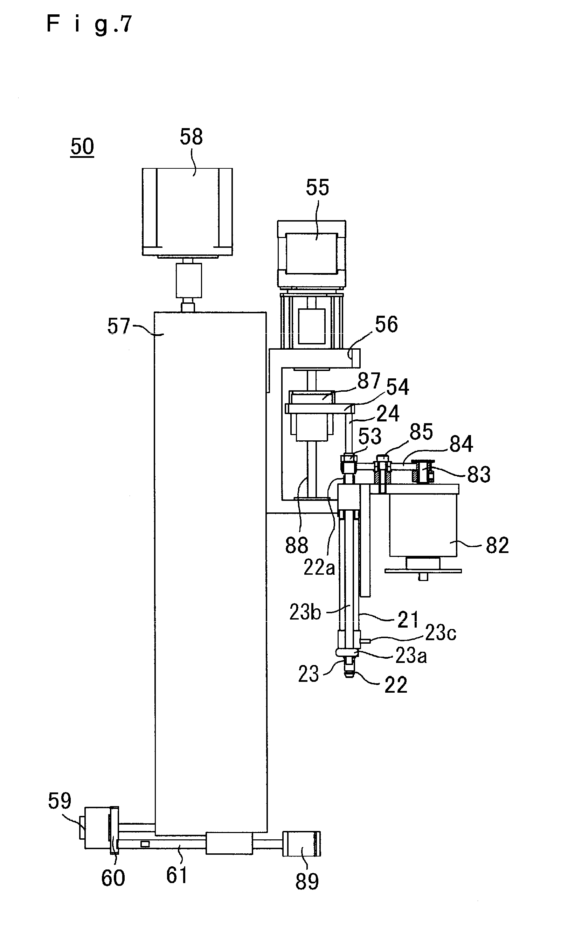

As shown in FIG. 6 or FIG. 7, the liquid rotating treatment device 50 has a plurality of (in this example, eight consecutive) nozzles 22 which are rotating bodies, and it is a device in which by installing various elements on the threaded sections 23 which have been provided in a slightly more upper section than the ends of the nozzles 22, various processes, for example, thinning of the liquid, homogenization of the suspension liquid, dispensing of the liquid, transportation, removal of impurities, extraction of the target material, stirring, washing, and the like, are possible.

The liquid rotating treatment device 50 comprises, as shown in FIG. 6 and FIG. 7, a plurality of (in this example, eight consecutive) nozzles 22 which are rotating bodies, nozzles 22 that are covered by caps 20 and are provided with a suction and discharging part, threaded sections 23 that are provided in a slightly more upper section than the lower ends of the nozzles 22, that install the caps 20 by threading, and rods 24 for sliding the plungers (not shown in the drawing) within the cylinders 22a that are communicated with the nozzles 22. Furthermore, the liquid rotating treatment device 50 comprises, in order to rotate the eight consecutive nozzles 22 and the cylinders 22a about the axis center thereof, synchronous pulleys 53 provided on the same center, a motor 82 for rotating the eight consecutive nozzles 22 and the cylinders 22a, a motor shaft 83 of the motor 82, and a belt 84 that spans the eight synchronous pulleys 53 and the motor shaft 83. Reference symbol 85 denotes a roller for adjusting the tension of the belt 84. Here, in FIG. 6, the motor 82, the motor shaft 83, the belt 84, and a tension adjustment rotor 85 have been omitted to improve viewability. Furthermore, in FIG. 7, the installation of the reaction vessel 11, and the like, has been omitted.

The eight rods 24 are installed by hooking end sections 24a that protrude in the radial direction with a larger shape than the diameter of the rods 24, to eight notched sections provided on the edge of a drive plate 54, and the drive plate 54 is connected to nut sections 87 that are threaded to ball screws 88. The rods 24 are always biased in the downward direction by a spring that is provided on the cylinders 22a. As a result, in a case where the rods 24 move in the upward direction, they are raised by the nut sections 87, but when they descend in the downward direction, they descend by the spring force, rather than by the nut sections 87. The ball screws 88 are rotationally driven by a motor 55 provided on a supporting member 56, which has a letter-U shaped cross-section, and as a result, the drive plate 54 and the eight rods 24 simultaneously move vertically.

In FIG. 7, reference symbol 23a denotes a tip removal plate for removing the installed dispensing tip, and reference symbol 23b denotes a depressing rod for depressing the tip removal plate 23a. The depressing rod 23b is depressed by the drive plate 54 by lowering the drive plate 54 to the bottom dead center of the rods 24. Reference symbol 23c denotes a flow passage for connecting to a pressure sensor.

The supporting member 56 is vertically movable by a vertical movement mechanism that is configured by a ball screw mechanism provided within an enclosure 57. A motor 58 rotationally drives the ball screw. A magnetic force device comprising; a motor 59 for moving a magnet 89 which is for applying or removing a magnetic field from the outside of the dispensing tip installed on the nozzles 22 to within the tip, a horizontal rod 60, a rod 61, and the magnet 89, is provided on the underside of the enclosure 57, and moves the magnet 89 left and right in the figure.
The liquid rotating treatment device 50 is provided such that it is suspended from the upper side, and is movably provided as a result of an X axis Y axis movement mechanism that utilizes a linear movement mechanism (not shown in the drawing), such that it covers all areas of the reaction measurement processing system 10.

The liquid treatment area 51 of FIG. 6 comprises; a cartridge vessel 62 having eight consecutive specimen storage wells 62a that store the suspensions in which the specimens are suspended, a matrix form vessel 65 having five columns by eight rows, eight cartridge vessels 70 for storing the various test reagents and materials necessary for executing real time PCR, or treatment products, and a holding rack 70a for retaining the eight reaction vessels 11 and the caps 20.

Furthermore, on the specimen storage wells 62a, barcodes 62b are respectively applied showing the information relating to the specimens thereof. The barcodes 62b are read by moving a barcode reading section 63 which reads the barcode, so as to scan the barcode. Reference symbol 64 denotes a movement mechanism of the barcode reading section 63.

The matrix form vessel 65 retains; a column of filter built-in tips 66 for removing impurities following the homogenization process of the suspension containing the specimen, a column of dispensing tips 67, a column of vessels 68 having a corrugated surface for executing the homogenization process, and a column of vessels 69 that store the test reagents necessary for PCR.

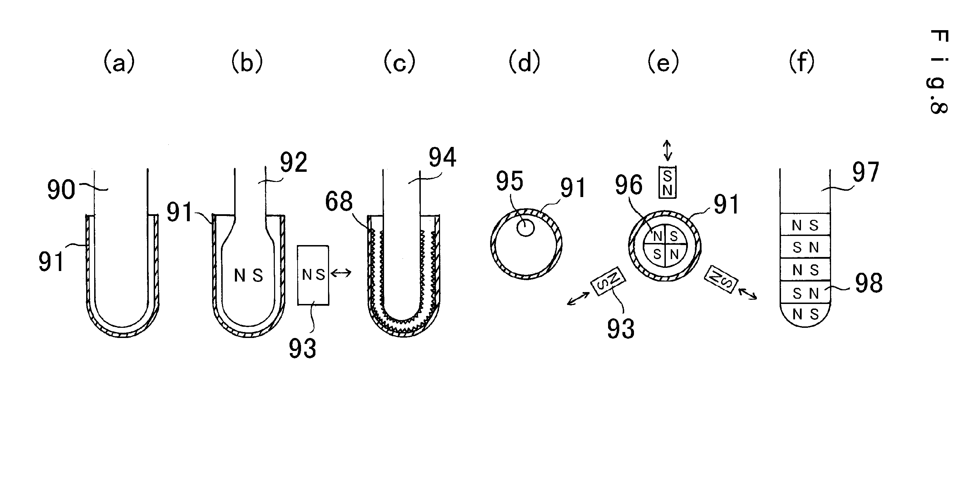

FIG. 8 illustrates an example of a vessel used in the homogenization process of the suspension mentioned above, and an example of a rod form member for homogenization that is inserted into the vessel and is to perform a rotation process. The homogenization process is performed, in a case such as where the specimen is biological tissue, in order to simplify the extraction of genetic material, such as nucleic acids and the like, from cells by crushing the biological tissue to the cellular level.

FIG. 8 (a) shows a configuration with a vessel 91 that stores the suspension, and a rod form member 90 that has a slightly smaller diameter than the vessel inner surface thereof and has a size wherein the outer surface approaches the vessel inner surface such that a sufficient degree of space is generated for crushing the contained solid material when it is inserted into the vessel. FIG. 8 (b) shows a configuration that is used in a case where magnetic particles are mixed into the suspension and the crushed solid materials are captured from within the homogenized suspension. In this case, the rod form member itself is made to have lines of magnetic force in a direction that is perpendicular to the axial direction, and the magnetic particles are stirred. It is also acceptable to provide a magnet 93 on the outer section of the vessel that has a stronger magnetic force than the magnetic force of the rod form member itself, such that the magnetic particles are attached onto the inner wall of the vessel.

In regard to FIG. 8 (c), as well as making the inner surface of the vessel 68 a corrugated shape, it has been made easier to crush the solid materials within the suspension by also making the outer surface of the rod form member 94 a corrugated shape.

FIG. 8(d) shows a configuration with a vessel 91 and a rod form member 95 that has a smaller diameter than the diameter of the vessel inner surface thereof, and rotates while rotating about the surroundings of the axis of the vessel in a state where it has approached the vessel inner surface thereof, such that a sufficient degree of space is generated for crushing the contained solid material when it is inserted into the vessel.

In regard to FIG. 8 (e), as well as providing a plurality of magnets 93 on the outer section of the vessel 91 that are detachable with respect to the vessel, in regard to the rod form member 96, four rod magnets are adjacently arranged along the axial direction such that the polarities thereof are mutually different. As a result, the mixing of the magnetic particles mixed into the suspension can be more effectively performed.

In regard to FIG. 8(f), the rod form member 96 has been formed by stacking a plurality of magnets in a state where the polarity of the adjacent magnets have been mutually reversed. As a result, the mixing of the magnetic particles mixed into the suspension can be more effectively performed.

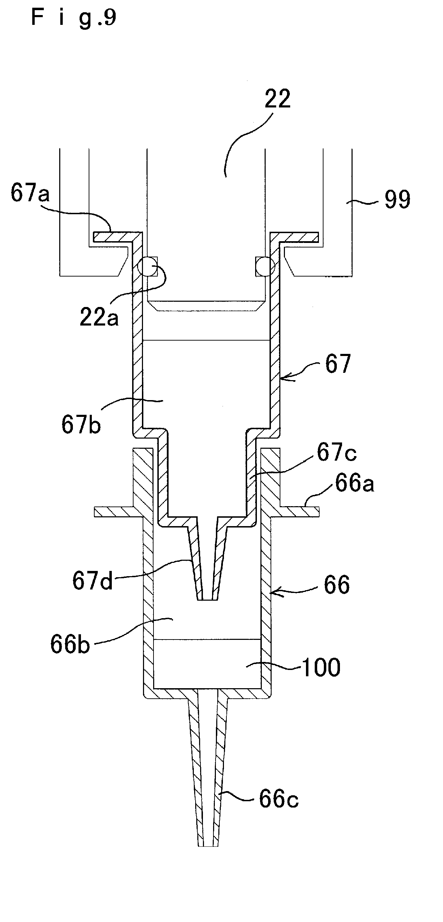

FIG. 9 shows a usage state of a case where the filter built-in tip 66 which is retained on the matrix form vessel 65 of the processing area, is used by installing it on the liquid rotating treatment device 50.

The filter built-in tip 66 is used by engaging it on the dispensing tip 67. The dispensing tip 67 comprises a flange 67a which is provided on the upper side, a storage section 67b which stores the liquid, an engaging section 67c which is provided on the underside of the storage section 67b and engages the opening part of the filter built-in tip 66, and a small diameter section 67d that is communicated with the storage section 67b, on the underside of the storage section 67b, and which has a thinner diameter than the storage section 67b and has a liquid suction and discharge part.

The filter built-in tip 66 comprises a flange 66a provided on the upper end, a storage chamber 66b that has an opening part which is engagable by means of the engaging section 67c of the dispensing tip, in which the liquid is storable, and with a built in filter 100, and a small diameter section 66c that is provided on the underside of the storage chamber 66b that is communicated with the storage chamber 66b and that has a smaller diameter than the storage chamber 66b. It is necessary for the filter 100 to have a bore diameter corresponding to the target to be filtered.

In order to remove the impurities, or separate the target material from within the suspension using the filter built-in tip 66, then as shown in FIG. 9, the end sections of the nozzles 22 provided on the liquid rotating treatment device 50 are engaged with the upper end opening part of the dispensing tips 67, and a connection member 99 provided on the liquid rotating treatment device 50, and the flanges 67a provided on the upper ends of the dispensing tips 67 are engaged and fitted. Next, by engaging the opening part of the storage chamber 66b of the filter built-in tip 66 with the engaging section 67c of the dispensing tip 67, it is installed on the filter built-in tip 66. As a result of suction or discharging of the liquid in such an engaged state such that the liquid passes through the filter 100, the impurities or the target material within the liquid are separated.

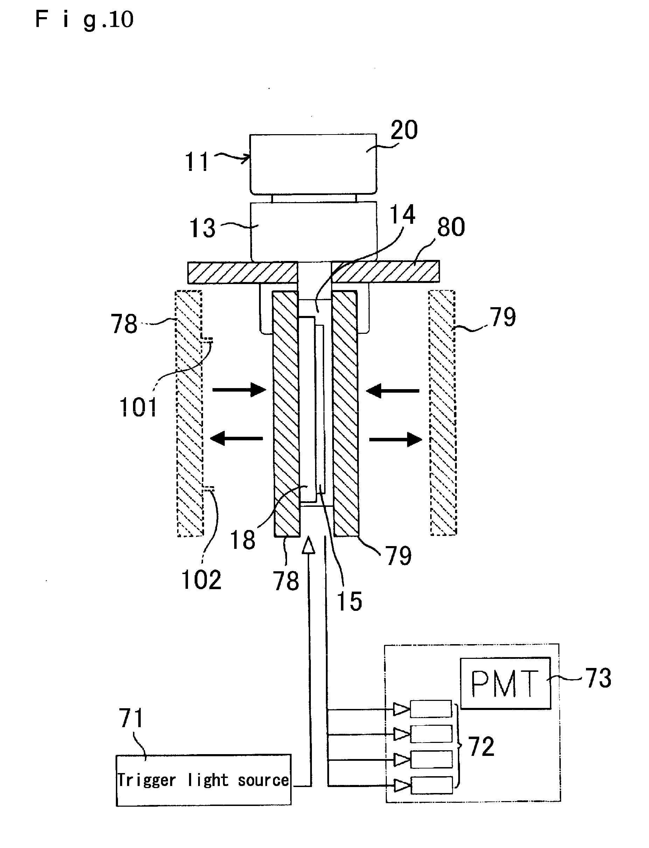

As shown in FIG. 6 or FIG. 10, the reaction measuring device 52 comprises; a PCR unit 80 that retains the eight reaction vessels 11 to which the target solutions have been introduced and sealed within the reaction chambers 15 (or 33, 43, and the like), such that temperature controls and optical measurements are possible, heating and cooling sections 78 and 79 having Peltier elements that sandwich the reaction sections 14 from both sides along the lamination direction in order to heat or cool the reaction sections 14 of the reaction vessels 11 that are retained by the PCR unit 80, a trigger light source 71 that, in a case where a fluorescent material is used as a marker material within the reaction chambers 15, irradiates excitation light for obtaining optical information from the marker material onto the irradiation positions 75 inside the reaction chambers 15, a light receiving section 72 that receives the light from the reaction chambers 15 at light reception positions 76, and a photomultiplier 73 that converts the received light into an electrical signal.

As shown in FIG. 6 and FIG. 10, in regard to the reaction vessels 11, they are respectively inserted into the eight holes 80a of the PCR unit 80 in a state where the opening parts 13 thereof are covered by the caps 20, and in a state where the nozzles 22 have been installed, and are supported by the stepped portions of the opening parts 13, and the reaction section 14 is inserted into the slit 80b of the PCR unit 80. On the underside of the PCR unit 80, the tabular heating and cooling sections 78 and 79 are provided such that they sandwich the reaction section 14, on both sides along the lamination direction thereof.

The heating and cooling sections 78 and 79 are detachably provided with respect to the reaction sections 14 by means of an opening and closing mechanism 81. On the heating and cooling section 78, which is on the side face side on which the plates 18 of the reaction sections 14 have been provided, protrusion sections 101 and 102 for pressure deforming the plates 18 are provided such that they protrude in the normal direction of the side surface of the heating and cooling section 78 at points corresponding to the closing positions 37 and 38. When the reaction vessels 11 are installed on the PCR unit 80, the heating and cooling sections 78 and 79 are moved to positions farther away from the reaction section 14 by means of the opening and closing mechanism 81, and when the heating and cooling is performed, it is performed in a state where the heating and cooling sections 78 and 79 are adjacent or in contact with the reaction section 14. The temperature control for the heating and cooling sections 78 and 79 is performed by setting the direction and magnitude of an electrical current applied to the Peltier elements provided on the heating and cooling sections 78 and 79, by program control from an information processing device (not shown in the drawing).

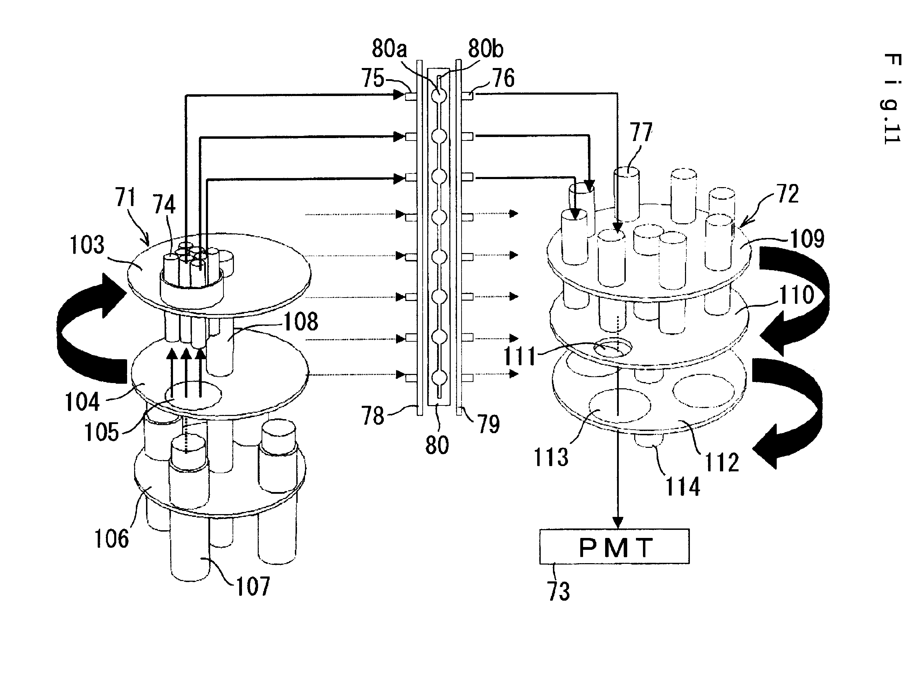

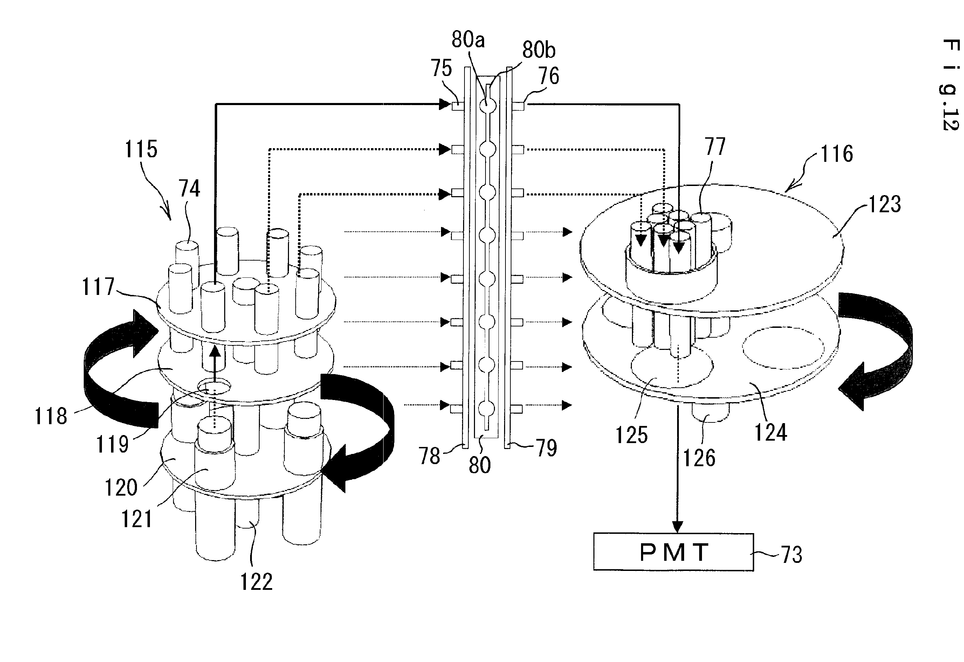

Furthermore, an optical information measuring section for measuring the optical information within the reaction chambers 15, is provided on the reaction measuring device 52. Here, supposing a case where the target material for which the quantity within the reaction chambers 15 is to be measured, is labeled by various fluorescent materials, the optical information measuring section comprises; a trigger light source 71 for irradiating excitation light at the irradiation positions 75 respectively set within the eight reaction sections 14, a light receiving section 72 for receiving the emitted light within the reaction sections 14 at the fixed light reception positions 76 of the eight reaction sections 14, and a photomultiplier 73 that converts the received light into an electrical signal. In FIG. 6 (similarly in FIG. 11 and FIG. 12), the irradiation positions 75 and the light receiving positions 76 are provided on the side face sides facing the heating and cooling sections 78 and 79, and in FIG. 10, it differs in that they are provided on the film formation face of the reaction sections 14 (or the thick portion) rather than the side face facing the heating and cooling sections 78 and 79. Furthermore, in regard to the irradiation positions 75 and the light receiving positions 76, it is acceptable for a case where they are provided on the same side faces, or a case where they are respectively provided on two adjacent side faces such that the irradiation direction and the light reception direction are at right angles to each other.

FIG. 11 shows a specific example of the trigger light source 71 and the light receiving section 72. The trigger light source 71 comprises; a rotating plate 103 which supports a bundle of optical fibers 74 that extend to the irradiation positions 75 of the eight reaction sections 14, a rotating plate 104 to which an optical lens 105 has been fitted into a hole that has been pierced in a location corresponding to the bundle of optical fibers 74, a supporting plate 106 onto which optical fibers 107 which introduce laser light from laser light sources (not shown in the drawing) that emit laser light having a plurality of wavelength types (four types in this example), are arranged at equal space intervals around the circumference along the traveling path of the optical lens 105, and a shaft 108 that rotatably supports the rotating plate 103 and the rotating plate 104 in a state where they are connected, while supporting the supporting plate 106 such that it becomes unrotatable. According to the trigger light source 71, the lights from the four types of light sources which generate laser light having a plurality of wavelength types, are temporally switched, and light can be simultaneously irradiated in the eight reaction chambers 15 at the irradiation positions 75. Hence the trigger light source 71 has a light source selection section. The end sections of the optical fibers 74 provided at the irradiation positions 75 correspond to the irradiation end sections.

The light receiving section 72 comprises; a supporting plate 109 that supports eight optical fibers 77 which extend to the light reception positions 76 of the eight reaction chambers 15, such that they are arranged at equal space intervals, a rotating plate 110 in which a hole 111 with an area corresponding to the diameter of the optical fibers 77 has been pierced on the circumference corresponding to the arrangement positions of the optical fibers 77 of the supporting plate 109, a rotating plate 112 that is rotatably provided independently of the rotating plate 110 on which a plurality of types (four types in this example) of filters 113 have been arranged, and a shaft 114 that unrotatably supports the supporting plate 109, and independently rotatably supports the rotating plate 110 and the rotating plate 112. Hence this light receiving section 72 has a light reception position selection section and a filter selection section. The ends of the optical fibers 77 provided at the light reception positions 76 correspond to the light reception end sections.

FIG. 12 shows the trigger light source 115 and light receiving section 116 according to another embodiment. The trigger light source 115 comprises; a supporting plate 117 that supports the eight optical fibers 74 which extend to the irradiation positions 75 of the eight reaction sections 14, such that they are arranged at equal space intervals, a rotating plate 118 in which a hole 119 with an area corresponding to the diameter of the optical fibers 74 has been pierced on the circumference corresponding to the arrangement positions of the optical fibers 74 of the supporting plate 117, a supporting plate 120 that is rotatably provided independently of the rotating plate 118 and on which optical fibers 121 from a plurality of types (four types in this example) of light sources are arranged at equal space intervals, and a shaft 122 that unrotatably supports the supporting plate 117 and rotatably supports the rotating plate 118. Hence the trigger light source 115 has a light source irradiation position selection section.

The light receiving section 116 comprises; a supporting plate 123 that supports the eight optical fibers 77 that extend from the light reception positions 76 of the eight reaction chambers 15 as a bundle, a rotating plate 124 that is provided with four types of filters 125 by piercing a plurality (four in this example) of holes having positions and sizes corresponding to the bundles of optical fibers 77 of the supporting plate 123, and a shaft that unrotatably supports the supporting plate 123 and rotatably supports the rotating plate 124. Accordingly, the light receiving section 116 has a filter selection section.

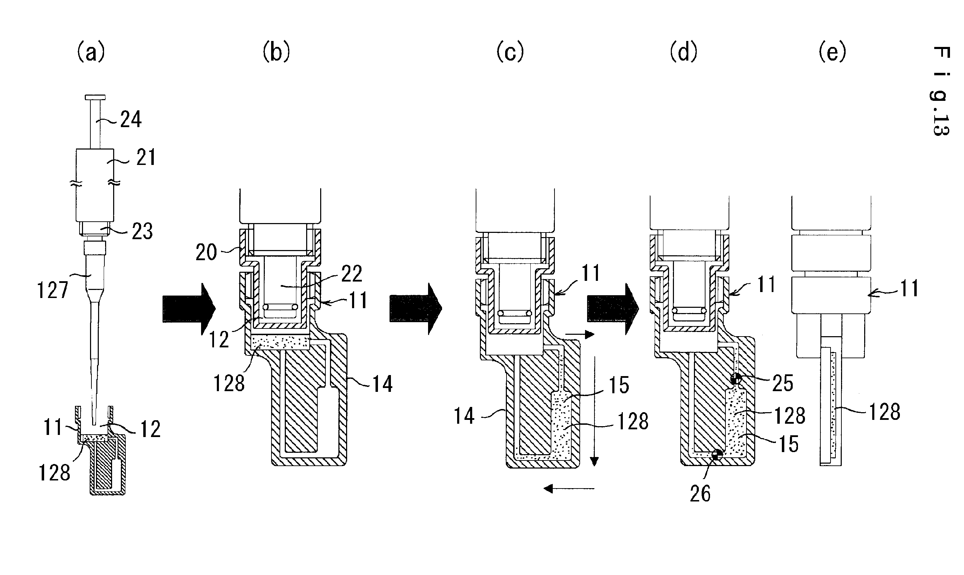

Next, the process flow using the reaction measurement processing system 10 explained above is explained based on FIG. 13.
Here, a case in which measurement is performed by using the real time PCR method to measure the quantity of DNA contained in a fixed specimen is explained. Real time PCR is a method for measuring the concentration of nucleic acids by using a nucleic acid probe. The method thereof utilizes, for example, a phenomenon wherein at the time the nucleic acid probe that has been labeled with a fluorescent dye hybridizes into the target nucleic acid, the light emission of the fluorescent dye decreases by a level that depends on the type and base sequence of the base to which the fluorescent dye has bonded, or a phenomenon wherein the light emission strength increases as a result of removing the nucleic acid probe from the target nucleic acid (light emission and light extinction phenomena), or utilizes a method in which a test reagent that emits fluorescent light as a result of the insertion of double-stranded DNA, is added to the reaction system, then a method of detecting the fluorescent light accompanying amplification is utilized, and the determination is performed by detecting the fluorescent light strength thereof (the intercalator method).

In the cartridge vessel 62 of the reaction measurement processing system 10, eight specimens comprising suspensions in which biological tissue, such as skin that has been obtained from patients or the like is suspended, are stored in advance. Furthermore, in the vessels 69 and the cartridge vessels 70, for example, test reagents necessary for PCR, DNA polymerase, reaction buffer liquids, fluorescent test reagents, primers, other test reagents thereof, and the like, are stored in advance. As a result of the nozzles 22 of the liquid rotating treatment device 50 being depressed with respect to the eight dispensing tips retained on the tip rack (not shown in the drawing) by a raising and lowering mechanism (not shown in the drawing), the eight dispensing tips are simultaneously installed by engagement, then the specimens stored in the cartridge vessel 62 are simultaneously suctioned, the liquid rotating treatment device 50 is moved, and they are transported to the group of vessels for homogenization 68, and discharged into the vessels.

The dispensing tips are removed by depressing the drive plate 54, and depressing the tip removal plate 23a via the depression rod 23b. Next, the rod form members 94 are threaded to the threaded section 23 of the nozzles 22 of the liquid rotating treatment device 50 by rotating the nozzles 22, the rod form members 94 are inserted into the vessels 68 by the raising and lowering mechanism, and by rotating the nozzles 22 by using the rotation mechanism, the biological tissue which is a solid material that is contained in the suspension, is crushed to the cellular level thereof, or is homogenized.

Next, following the detachment of the rod form member 94 from the threaded section 23 of the liquid rotating treatment device 50 by reverse rotation using the rotation mechanism, the liquid rotating treatment device 50 is moved to the position at which the dispensing tips 67 are stored, that is to say, to the second column from the left on the drawing, of the matrix form vessel 65, and all eight are simultaneously installed on the nozzles 22 by using the connection member 99. Next, the dispensing tips 67 are moved to the vessels 68, and the suspensions stored within the vessels are suctioned. The dispensing tips 67 are, in a state where they are storing the suspensions, moved to the position at which the filter built-in tips 66 are stored, that is to say, the leftmost column on the drawing, of the matrix form vessel 65, and they are engaged with the dispensing tips 67 by engaging the opening part of the filter built-in tip 66 with the engaging section 67c of the dispensing tip 67. In this state, the liquid rotating treatment device 50 is moved to the position of the vessels 69, and the small diameter sections 66c of the filter built-in tips 66 are inserted into the vessels, and the homogenized suspensions are discharged.

Then, by means of the filters 100 of the filter built-in tips 66, the impurities within the suspensions are captured, and a solution without impurities that contains the target DNA is discharged into the vessels 69. Next, following removal of the filter built-in tips 66, the nozzles 22 are transported to the cartridge vessel 70, in which the test reagents and the like, are stored, the solutions containing the DNA are suctioned by the dispensing tips 67, and following transport and discharge into a predetermined well of the cartridge vessel 70 in which the necessary test reagent, for example, a probe that is labeled with fluorescent material, and the like is stored, a solution in which it is mixed with the necessary test reagent is produced. The eight dispensing tips 67 are simultaneously removed by operating the connection member 99.

Next, the nozzles 22 are moved to the tip rack (not shown in the drawing) by moving the nozzle heads of the liquid rotating treatment device 50, and by operating the raising and lowering mechanism of the nozzles 22, the nozzles 22 are installed by inserting into and engaging the eight unused dispensing tips 127 stored in the tip rack. Next, the dispensing tips 127 are moved to the eight vessels 69, and the solutions 128 stored within the vessels 69 are simultaneously suctioned into the unused eight consecutive dispensing tips 127. Then, as shown in FIG. 13 (a), they are transported to the eight reaction vessels 11 that are retained by the holding rack 70a, and the solutions are discharged into the storage chambers 12 thereof. Following discharging, the eight dispensing tips 127 are removed from the nozzles 22 of the liquid rotating treatment device 50 by the tip removal plate 23a, and are discarded.

Next, the liquid rotating treatment device 50 is moved to the position of the holding rack 70a in which the eight caps 20 are stored, the nozzles 22 are simultaneously inserted into the eight caps 20, and by rotating the nozzles 22, the eight caps 20 are installed on the threaded sections 23.

Next, as shown in FIG. 13 (b), the nozzle heads of the liquid rotating treatment device 50 are moved to the position at which the reaction vessels 11 of the holding rack 70a are retained, the caps 20 installed on the nozzles 22 are inserted within the opening parts 13 and the storage chambers 12 of the reaction vessels 11, in which the solutions have been stored, and as a result of simultaneously rotating the nozzles 22, they are installed by threading the caps 20 and the opening parts 13. Then, simultaneous high-speed rotation of the nozzles 22 is performed in the same rotation direction as the rotation for threading of the caps 20 and the opening part 13. Since the reaction vessel 11 is, in regard to the holding rack 70a, retained in a state where the reaction chambers 15 thereof are respectively inserted into the slit-shaped spaces provided on the holding rack 70a, rotation of the reaction vessels 11 does not occur during the rotation of the nozzles 22. In a case where the reaction vessel 11 itself is rotated, it is performed on the upper side of the holding rack 70a.

Then, as shown in FIG. 13 (c), the solutions 128 stored within the storage chambers 12 move to the reaction chambers 15 by centrifugal force, and are introduced into the reaction chambers 15.

The reaction vessels 11 in which the solutions 128 have been introduced to the reaction chambers 15 are transported to the PCR unit 80 by the liquid rotating treatment device 50 in a state with the caps 20 installed, and they are retained such that they are supported by the hole 80a and the slit 80b portions of the PCR unit 80.

As shown in FIG. 13 (d) and (e), the heating and cooling section 78 is brought close to the reaction chambers 15 before heating, and inside of the reaction chambers 15 are simultaneously made a sealed state by pushing the protrusion sections 101 and 102 against the corresponding closing positions 25 and 26, and deforming the plates 18.

Next, not only the heating and cooling section 78, but the heating and cooling section 79 is simultaneously brought close to, or in contact with, the reaction chambers 15 from the back side, and temperature control is performed based on the PCR method. At that time, in the present embodiment, since the heating and cooling sections 78 and 79, to which Peltier elements have been provided, are directly brought close to, or into contact with, the reaction chambers 15, it becomes possible to supply a vessel for PCR with faithful responsiveness with respect to temperature changes.

In this PCR amplification process, for example, as shown in FIG. 11, in regard to the trigger light source 71, which is the light for excitation that excites the fluorescent material which is the labeled material used in the reaction chambers 15, light from the light source of the wavelength selected by the rotating plate 104 is simultaneously irradiated into the reaction chamber 15 through the optical fibers 74 at the irradiation positions 75. At that time, at the light receiving sections 72, in regard to the eight reaction chambers 15, the emitted light received at the light reception positions 76 is sequentially input into the PMT 73 by sequential selection by means of the rotating plate 110, and by selecting the appropriate filter 113 at the rotating plate 112. The operations above, in regard to all four types of light wavelengths, measure by converting the light received from all reaction chambers 15 into an electrical signal. As a result, the state of the light emission strength of the fluorescent material is measured in real time, and the quantity of DNA that is the subject thereof, is measured.

According to the present embodiment, it is possible to homogenize the suspension containing the specimen, extract a solution containing the target DNA from the homogenized suspension, thin the solution to which all test reagent types have been mixed with the DNA, and efficiently and consistently automatically perform the operations until the optical information is obtained, while performing accurate and highly responsive temperature controls of the thinned solution, in a compact device.

The embodiments above have been specifically explained in order to better understand the present invention, and do not restrict other embodiments in any way. Accordingly, they is changeable within a scope that does not depart from the gist of the invention. For example, in regard to the optical information measuring device, it is acceptable for optical systems such as a half mirror, a mirror, or a filter, to be used to distribute the light, rather than selecting the light by temporal switching as mentioned above.

Furthermore, the various mechanisms are not restricted in any way to those mentioned above, and, for example, as a rotation mechanism of the nozzles, it is possible to use a gear mechanism instead of a belt mechanism. Furthermore, for example, it is possible to use the rotation mechanism achieved by the present inventor that has been disclosed in PCT/JP02/01147 (WO02/063300 A1).

The shape of the reaction vessels is not restricted to that explained above, and it is acceptable if they are not cylindrical. Furthermore, it is acceptable if they are installed directly on the nozzles without including the cap. In regard to the rotation mechanism and the suction and discharge mechanism of the nozzles of the liquid rotating treatment device 50, the number of nozzles, and the number of the various vessels, they are not restricted by the above explanation in any way. Cases where the number of nozzles and vessels is one, or a number other than eight, are acceptable. Furthermore, although the filter was used to remove the impurities within the suspension, it may be used to capture the target material.

Furthermore, although the explanation above used the optical information measuring section of FIG. 11, it is acceptable to use the optical information measuring section of FIG. 12. Furthermore, although the heating and cooling section was provided on both sides of the reaction chamber, it is acceptable to provide it on only one side. Furthermore, it is acceptable for the heating and cooling section to involve a liquid or a gas, rather than a solid. Moreover, in the explanation above, although only embodiments regarding the thinning of a liquid were given, capillaration of a liquid can also be performed.

Furthermore, components such as the reaction vessels, the storage chambers, the reaction chambers, the flow passages, the reaction sections, the rotating body connecting axles, the dispensing tips, the light measuring sections, the caps, all vessel types, the test reagents, the rod form members, the nozzles, and the heating and cooling sections, and all mechanism types mentioned above can be arbitrarily combined while appropriately modifying them.

### [Industrial Applicability]

This relates to the reaction vessel, the reaction measuring device, and the liquid rotating treatment device according to the present invention. The present invention is, for example, related to fields in which processing, testing, and analysis related to genes principally in regard to, for example, DNA, RNA, mRNA, rRNA, tRNA, and plasmids, is required, and is related to all fields, for example, industrial fields, agricultural fields such as food products, agricultural products, and seafood processing, health care fields such as drug fields, sanitation, health, disease, and genetics, and scientific fields such as biochemistry or biology. The present invention can particularly be used in various DNA-handling analysis and tests, such as PCR, and real time PCR.

### [Brief Description of the Reference Symbols]

- 10: Reaction measurement processing system
- 11, 31, 41, 131, 141, 151, 161, 181: Reaction vessel
- 14, 34, 48, 134, 144, 155, 165, 185: Reaction section
- 15, 33, 43, 133, 143, 153, 164, 184: Reaction chamber
- 18: Plate
- 20: Cap
- 22: Nozzle (rotating body)
- 25, 26: Closing position
- 50: Liquid rotating treatment device
- 52: Reaction measuring device
- 71: Trigger light source
- 72: Light receiving section
- 73: PMT
- 78, 79: Heating and cooling section

## Claims

1. A reaction vessel being a vessel having: a storage chamber in which a liquid is storable, that has an opening part; and a reaction chamber that is communicated with said storage chamber and is formed thinner or narrower than said storage chamber, and said vessel is installable on a rotatable rotating body provided externally, and is formed such that when said vessel is installed on said rotating body, a rotation axis of said rotating body passes through said vessel, and said reaction chamber is positioned farther away from said rotation axis than said storage chamber.

2. A reaction vessel according to claim 1, wherein said rotating body is a rotatable nozzle in which suction and discharging of gases is possible, and said nozzle has a rotation axis along an axial direction thereof.

3. A reaction vessel according to either one of claim 1 and claim 2, wherein said rotating body is installable on an opening part of said storage chamber, such that a rotation axis thereof passes through said opening part.

4. A reaction vessel according to any one of claim 1 through claim 3, wherein at least a portion of said reaction chamber is transparent or semi-transparent.

5. A reaction vessel according to any one of claim 1 through claim 4, wherein a portion or the entire reaction chamber is formed by a soft material, and said reaction chamber is sealable by deforming said soft material.

6. A reaction vessel according to claim 3, wherein a cap, which is freely detachably installed on a lower end section of said rotating body, and that covers said lower end section, is freely detachably provided on said opening part in order to cover said opening part.

7. A reaction vessel being a vessel having: a storage chamber in which a liquid is storable, that has an opening part; a reaction chamber that is communicated with said storage chamber and is formed thinner or narrower than said storage chamber; and a fluid suction and discharge part that is communicated with said reaction chamber, and is formed such that an opening part of said storage chamber is closable by means of a lower end section of a nozzle, which performs suction and discharging of fluid.

8. A reaction vessel according to claim 7, wherein at least a portion of said reaction chamber is transparent or semi-transparent.

9. A reaction vessel according to either one of claim 7 and claim 8, wherein a portion or the entire reaction chamber is formed by a soft material, and said reaction chamber is sealable by deforming said soft material.

10. A reaction measuring device comprising: one or two or more reaction vessels according to any one of claim 1 through claim 9; one or two or more heating and cooling sections that heat or cool said reaction chamber, which are provided making contact with, or close to, said reaction chamber; and one or two or more optical information measuring sections that obtain optical information within said reaction chamber.

11. A reaction measuring device according to claim 10, wherein said optical information measuring section comprises: two or more irradiation end sections provided at the two or more irradiation positions of said reaction chamber of said reaction vessel; a plurality of types of light sources which respectively generate light having a plurality of wavelength types; a light source selection section which temporally switches and selects one type of light within the light from said light sources and simultaneously transmits the light to said irradiation end sections; two or more light reception end sections provided at the two or more light reception positions of said reaction chamber of said reaction vessel; a light reception position selection section that temporally switches and selects the light from said light reception end sections; a filter selection section that temporally switches and selects among the plurality of types of filters which the light is to be passed through from the selected light reception position; and a photoelectric element that sequentially inputs the light that has passed through the selected filter, which is light from the selected light reception position.

12. A reaction measuring device according to claim 10, wherein said optical information measuring section comprises: two or more irradiation end sections provided at the two or more irradiation positions of said reaction chamber of said reaction vessel; a plurality of types of light sources which respectively generate light having a plurality of wavelength types; a light source irradiation position selection section that temporally switches and selects one type of light within the light from said light sources, and temporally switches the selected light and transmits the light to a light reception end section; two or more light reception end sections provided at the two or more light reception positions of said reaction chamber of said reaction vessel; a filter selection section that temporally switches and selects among the plurality of types of filters which the light is to be passed through from the selected light reception position; and a photoelectric element that sequentially inputs the light that has passed through the selected filter.

13. A liquid rotating treatment device having: one or two or more rotatable rotating bodies; one or two or more reaction vessels that are installably formed such that they are freely detachable on said rotating bodies; and a rotational drive section that rotationally drives said rotating bodies, and said reaction vessel has: a storage chamber in which liquid is storable, that has an opening part; and a reaction chamber that is communicated with said storage chamber and is formed thinner or narrower than said storage chamber, and is formed such that a rotation axis of said rotating body passes through said vessel, and said reaction chamber is positioned farther away from said rotation axis than said storage chamber, and liquid stored in said storage chamber of said reaction vessel is introduced into said reaction chamber.

14. A liquid rotating treatment device according to claim 13, wherein said rotating body is a rotatable nozzle in which suction and discharging of a fluid is possible, and said nozzle has a rotation axis along an axial direction thereof.

15. A liquid rotating treatment device according to claim 13, wherein said rotating body is installable on an opening part of said storage chamber, such that the rotation axis thereof passes through said opening part.

16. A liquid rotating treatment device according to claim 15, having a cap which is freely detachably installed on a lower end section of said rotating body, and that covers said lower end section, and said cap is freely detachably installed on an opening part of said reaction vessel in order to cover said opening part.

17. A liquid rotating treatment device having: one or two or more nozzles in which the suction and discharging of gas is possible; a rotating drive section that rotates said nozzle such that it has a rotation axis along an axial direction of said nozzle; a movement section that moves said nozzle; a rod form member that is freely detachably installed on a lower end section of said nozzle; and a vessel into which said rod form member is insertable, and inside which a suspension wherein a solid material is suspended that is to be crushed or homogenized by rotation of said rod form member, is storable.

18. A liquid rotating treatment device according to claim 17, wherein said rod form member has a magnetic body bearing magnetism, and solid materials which are to be crushed or homogenized and magnetic particles are suspended in said suspension.
